# NEW EUROPEAN PATENT SPECIFICATION

(11) **EP 0 377 486 B2**
(45) Date of publication and mention of the opposition decision: **27.05.1998**
(45) Mention of the grant of the patent: 21.07.1993
(21) Application number: 90300004.0
(22) Date of filing: 02.01.1990
(51) Int. Cl.: F16L 58/10, F16L 55/16

(54) **Lining pipes**
Auskleiden von Rohren
Revêtement de tuyaux

(30) Priority: 04.01.1989 GB 8900063
(43) Date of publication of application: 11.07.1990
(73) Proprietor: SUBTERRA LIMITED, Wimbourne Dorset, BH21 4DA (GB)
(72) Inventor: Lippiatt, Raymond, Wimbourne Dorset BH12 4DA (GB)
(74) Representative: Cline, Roger Ledlie

(56) References cited:
- EP-A- 0 000 576
- CH-A- 466 560
- DE-A- 1 941 327
- DE-A- 2 629 214
- DE-A- 2 728 056
- DE-A- 3 519 439
- FR-A- 2 503 622
- PATENT ABSTRACTS OF JAPAN vol. 3, no. 130 (M-78) 27 October 1979, & JP-A-54 106923 (SUMITOMO DENKI KOGYO K.K.) 22 August 1979,

## Description

When pipes laid below ground begin to leak or lose their structural integrity, an alternative to relaying is to insert a liner. This technique is known as Sliplining or Pipe Insertion. The liner must be inserted along the line of the pipes and so must have a reasonable clearance during insertion to avoid undue friction; on the other hand the liner bore must be as close as possible to the pipe bore in order to minimise the reduction in capacity caused by the liner. The clearance between the liner and pipe bore and the liner itself cause a typical loss of carrying capacity of 35%.

It has been proposed to provide the liner of flexible material tube (eg olefin polymer) extruded in a circular shape which after deformation to a U or kidney or similar shape is pulled into the pipe to be lined and then inflated by pressure sometimes in combination with heat to return to a circular shape which is as close fitting as possible within the pipe (EP-A-0000579). Since pipelines in situ have diameters which vary along their length from a specified diameter by as much as 20% in one direction for example due to manufacturing tolerances, cracking, ovality and misalignment, one cannot select a liner of one diameter which will be ideal for the whole length of pipe to be lined. The manufacturers recommend that a slightly oversize liner is used, but if the liner is too large at any point, it cannot return to its circular shape resulting in a hoop deformity; if it is too small there will be an unused gap between the liner and the pipe; neither is acceptable from the requirement of close fit and true pipe circle.

It has also been proposed to provide a liner of slightly greater diameter than that of the pipe to be lined which is passed through a diameter reducing process to reduce its diameter below the internal diameter to the pipe before being inserted into the pipe. The diameter reduction may be performed by rolling, swaging (forcing through a die) or a method of pre-shrinking in manufacture; the reduction enables the liner to be inserted without undue friction (as Sliplining). After insertion into the pipe, the liner is reverted towards the diameter of the pipe by pressure and sometimes heat. The reversion of the liner in a pipe of varying diameter causes the liner to approach its original diameter in maximum pipe diameters and obviously to stop at a smaller diameter where the pipe diameter is less.

The reversion of a swaged liner is accompanied by a decrease in length and as the external diameter of the liner approaches the bore of the pipe, friction increases and prevents the completion of longitudinal compensation. This is particularly relevant where a pipeline had a series of throats which cause pinch points which lock up intermediate liner sections. The reversion of a rolled down liner is accompanied partly by a decrease in length and partly by a thickening of the walls, so that the problem is present in this method, although to a smaller degree.

According to the present invention a circular liner tube is reduced in cross section and deformed into a non-circular shape; the liner is inserted into the pipe to be lined; the liner is reverted towards its original circular shape and then increased in cross section. Preferably the liner is not reverted past its original dimensions. Reversion can be effected for example in two stages of applying pressure and/or heat to its interior, the effect in the second stage being greater than that in the first.

This arrangement enable the non-circular shape to change to a complete circle before expanding into contact with the pipe. The liner is not oversize in its reduced cross section and so no kinks are left as it expands from the non-circular shape, reducing the useful capacity of the liner.

An example of the invention will now be described with reference to the accompanying drawings in which:-
Figures 1 to 7 show cross sections through a pipe and/or a liner

In Figure 1, a pipe is shown with an exaggerated deformation, caused for example by uneven pressures acting upon it over its life. The deformation causes the walls of the pipe or its joints to leak and so it requires lining to make if fluid tight.

Figure 2 shows a liner extruded with a circular cross section. Its outer diameter is slightly larger (say by 2 to 5%) than the minimum 'diameter' to the pipe to be lined.

Figure 3 shows the liner of Figure 2 reduced in cross section by rolling. The diameter of the liner is reduced by about 8% and this is partly compensated by an increase in wall thickness. The diameter of the liner is now less than the minimum 'diameter' of the pipe to be lined.

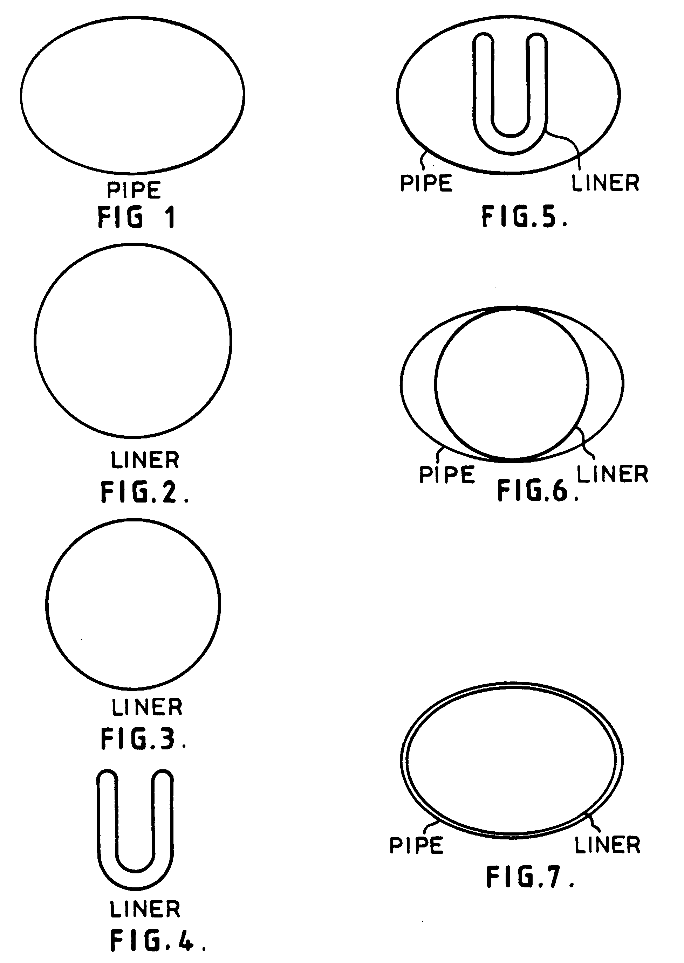

Figure 4 shows the liner of Figure 3 deformed into a non-circular shape; the deformation is into a U-shape. This deformation allows the liner to be bent in the transverse direction of the U, for ease of storage and transport. A round liner can only be bent to a radius of 20D whereas a U-shape liner can be bent transversely to a radius of 4D and so can easily be mounted on a drum and passed into the pipe from manholes and passed round bends normally encountered in sewer pipelines and manholes configurations. A round liner would require excavation of the pipe where bends of less than 15D radius were encountered in pipelines or at manholes. The liner can be retained in its deformed shape by taping.

It is in this state that the liner is fed into the pipe, for example by attaching a rope to one end and pulling it through the pipe. The rope may be pulled from manholes spaced along the pipe if the pipe has a length too long for pulling through in a single stage. Because the clearance of the liner in the pipe is large, the friction is low and long lengths of liner can be pulled through in one go. Liners reduced in cross section by swaging have to be fed after deformation directly into the pipe to be lined without storage since the reduction is not retained but largely disappears over a short period.

Figure 5 shows the liner of Figure 4 in place in the pipe.

Figure 6 shows the liner of Figure 5 after fluid at low pressure (say 3000,000 Pa) has been introduced in order to return to its circular shape although still of reduced cross section. The tape is weak and easily broken by the expansion force of the low pressure fluid. The initial return to the circular shape ensures that no kinks exist in the liner because it is not restricted by the pipe. The circular shape gives the liner strength to reinforce the pipe against further collapse. The liner is left under this pressure for a period (say 24 Hours) to settle back to the circular shape.

Figure 7 shows the pipe and liner of Figure 6 after fluid at a higher pressure (say 1.2 x 10 Pa) has been introduced into the liner to revert the liner towards its original cross section. The higher pressure is maintained for up to 24 hours. The expansion of the liner enables it to approach the shape of the pipe, even though this may not be exactly circular, without forming kinks, since these have already been avoided by the initial expansion to the circular shape. The higher pressure is selcted to be within 25 to 10% of the yield point of the liner. The higher pressure may be applied by filling with a hot liquid, since the effect of heat may be useful in bringing the liner more quickly towards its yield point. The heat of a hot liquid may be used on its own, without the application of pressure; a hot gas may be used or another form of heat such as radiant heat. Rolled liners have been found to revert axially first and then by a decrease in wall thickness and hence outside diameter, which has the advantage that friction will be low during the axial movement.

Pipes of most diameters (2.5 to 120cm) can be lined. For a 30cm pipe, the liner of Figure 2 would be extruded with a 31.5cm OD; (outside diameter) its wall thickness would be between SDR 11 and SDR 42. The liner of Figure 3 would be reduced to an OD of 29.5cm and then deformed to its non-circular shape. The deformation is more marked for smaller pipes, in order to provide a clearance of say 2cm for ease of sliding the liner through the pipe to be lined.

## Claims

1. A method of lining a pipe comprising reducing a circular liner tube in cross-section, deforming the reduced liner into a non-circular shape, inserting the reduced and deformed liner into the pipe to be lined reverting the liner towards its original circular shape and then reverting the liner towards its original cross-section.

2. The method of Claim 1 wherein the or each reversion step indudes increasing the pressure within the liner.

3. The method of Claim 1 or Claim 2 wherein the or each reversion step includes heating the liner.

4. The method of Claim 2 or Claim 3 wherein the or each reversion step includes filling the liner with a liquid.

## Patentansprüche

1. Verfahren zum Auskleiden einer Rohrleitung, bei dem der kreisförmige Querschnitt eines Futterschlauch vermindert wird, der verminderte Querschnitt des Futterschlauchs zu einem nicht-kreisförmigen Querschnitt verformt wird, der Futterschlauch mit dem verminderten und verformten Querschnitt in die auszukleidende Rohrleitung eingebracht wird, der Futterschlauch seine ursprüngliche, kreisförmige Form zurückgewinnt, und dann der Futterschlauch seinen ursprünglichen Querschnitt weitgehend zurückgewinnt.

2. Verfahren gemäß Anspruch 1, wobei bei dem oder jedem Rückgewinnungsschritt der Druck innerhalb des Futterschlauchs erhöht wird.

3. Verfahren gemäß Anspruch 1 oder 2, wobei bei dem oder jedem Rückgewinnungsschritt der Futterschlauch erhitzt wird.

4. Verfahren gemäß Anspruch 2 oder 3, wobei bei dem oder jedem Rückgewinnungsschritt der Futterschlauch mit einer Flüssigkeit gefüllt wird.

## Revendications

1. Un procédé de revêtement d'un tuyau comprenant la réduction de la section d'un tube de revêtement circulaire, la déformation du revêtement réduit en une forme non circulaire, l'insertion du revêtement réduit et déformé dans le tuyau à revêtir, en ramenant la taille du revêtement à sa forme circulaire d'origine avant de le ramener vers sa section d'origine.

2. Le procédé selon la revendication 1, dans lequel l'étape de réversion ou chaque étape de réversion englobe l'accroissement de la pression dans le revêtement.

3. Le procédé selon les revendications 1 ou 2, dans lequel l'étape de réversion ou chaque étape de réversion englobe un chauffage du revêtement.

4. Le procédé selon les revendications 2 ou 3, dans lequel l'étape de réversion ou chaque étape de réversion englobe le remplissage d'un liquide dans le revêtement.
